(19) Europäisches Patentamt / European Patent Office / Office européen des brevets

(11) **EP 2 813 668 B1**

(12) **FASCICULE DE BREVET EUROPEEN**

(45) Date de publication et mention de la délivrance du brevet:
**29.03.2023 Bulletin 2023/13**

(21) Numéro de dépôt: **14305696.8**

(22) Date de dépôt: **13.05.2014**

(51) Classification Internationale des Brevets (IPC):
**E21B 43/00** *(2006.01)*        **G01V 99/00** *(2009.01)*

(52) Classification Coopérative des Brevets (CPC):
**E21B 43/00;** G01V 99/005

(54) **MÉTHODE POUR OPTIMISER L'EXPLOITATION D'UN GISEMENT DE FLUIDE PAR PRISE EN COMPTE D'UN TERME D'ÉCHANGE GÉOLOGIQUE ET TRANSITOIRE ENTRE BLOCS MATRICIELS ET FRACTURES**

METHODE ZUR OPTIMIERUNG DER AUSBEUTUNG EINES FLUIDRESERVOIRS UNTER BERÜCKSICHTIGUNG EINES GEOLOGISCHEN UND VORÜBERGEHENDEN AUSTAUSCHTERMS ZWISCHEN MATRIXBLÖCKEN UND BRÜCHEN

METHOD FOR OPTIMISING THE EXPLOITATION OF A FLUID RESERVOIR BY TAKING INTO CONSIDERATION A GEOLOGICAL AND TRANSITIONAL EXCHANGE TERM BETWEEN MATRIX BLOCKS AND CRACKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2013 FR 1355479**

(43) Date de publication de la demande:
**17.12.2014 Bulletin 2014/51**

(73) Titulaire: **IFP Energies nouvelles**
**92500 Rueil-Malmaison (FR)**

(72) Inventeurs:
• **Bauer, Daniela**
**78000 Versailles (FR)**
• **Bourbiaux, Bernard**
**92500 Rueil Malmaison (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A1- 2 072 752        EP-A1- 2 453 106**
**US-A1- 2008 133 186**

• **B. BOURBIAUX: "Fractured Reservoir Simulation: a Challenging and Rewarding Issue", OIL & GAS SCIENCE AND TECHNOLOGY - REVUE DE L'INSTITUT FRANÇAIS DU PÉTROLE, vol. 65, no. 2, 1 mars 2010 (2010-03-01), pages 227-238, XP055101727, ISSN: 1294-4475, DOI: 10.2516/ogst/2009063**

## Description

La présente invention concerne le domaine de l'optimisation de l'exploitation de gisements souterrains, tels que des gisements d'hydrocarbures, notamment lorsque ceux-ci comportent un réseau de fractures.

La méthode selon l'invention, convient notamment pour l'étude des propriétés hydrauliques de terrains fracturés, et notamment pour étudier les déplacements d'hydrocarbures dans des gisements souterrains.

En particulier, l'invention concerne une méthode destinée à prédire les écoulements de fluides susceptibles de se produire à travers ce milieu, pour simuler une production d'hydrocarbures suivant divers scénarios de production.

L'industrie pétrolière, et plus précisément l'exploration et l'exploitation de gisements, notamment pétroliers, nécessitent d'acquérir une connaissance aussi parfaite que possible de la géologie souterraine pour fournir de façon efficace une évaluation des réserves, une modélisation de la production, ou la gestion de l'exploitation. En effet, la détermination de l'emplacement d'un puits de production ou d'un puits d'injection, la constitution de la boue de forage, les caractéristiques de complétion, le choix d'un procédé de récupération des hydrocarbures (tel que l'injection d'eau par exemple) et des paramètres nécessaires à la mise en oeuvre de ce procédé (tels que la pression d'injection, le débit de production,...) nécessitent de bien connaître le gisement. Connaître le gisement signifie notamment connaître les propriétés pétrophysiques du sous-sol en tout point de l'espace.

Pour ce faire, depuis longtemps, l'industrie pétrolière allie les mesures sur champ (in situ) aux modélisations expérimentales (réalisées au laboratoire) et/ou numériques (réalisées au moyen de logiciels). Les modélisations des gisements pétroliers constituent donc une étape technique indispensable à toute exploration ou exploitation de gisement. Ces modélisations ont pour but de fournir une description du gisement.

Les réservoirs fissurés constituent un type extrême de réservoirs hétérogènes comportant deux milieux contrastés, un milieu matriciel contenant la plus grande part de l'huile en place et présentant une faible perméabilité, et un milieu fissuré représentant moins de 1 % de l'huile en place et hautement conducteur. Le milieu fissuré lui-même peut être complexe, avec différents ensembles de fissures caractérisés par leur densité, longueur, orientation, inclinaison et ouverture respectives.

Les ingénieurs en charge de l'exploitation de réservoirs fracturés, ont besoin de parfaitement connaître le rôle des fractures. On appelle "*fracture*", une discontinuité plane, de très faible épaisseur par rapport à son extension, et qui représente un plan de rupture d'une roche du gisement. D'une part, la connaissance de la distribution et du comportement de ces fractures permet d'optimiser la localisation et l'espacement entre les puits que l'on compte forer au travers du gisement pétrolifère. D'autre part, la géométrie du réseau de fractures conditionne le déplacement des fluides tant à l'échelle du réservoir qu'à l'échelle locale où elle détermine des blocs matriciels élémentaires dans lesquels l'huile est piégée. Connaître la distribution des fractures, est donc très utile, aussi, à un stade ultérieur, pour l'ingénieur de réservoir qui cherche à calibrer les modèles qu'il construit pour simuler les gisements afin d'en reproduire ou prédire les courbes de production passées ou futures. A ces fins, les spécialistes de géosciences disposent d'images tridimensionnelles des gisements, permettant de localiser un grand nombre de fractures.

Ainsi, pour reproduire ou prédire (i.e. "simuler") la production d'hydrocarbures lors de la mise en production d'un gisement suivant un scénario de production donné (caractérisé par la position des puits, la méthode de récupération, ...), le spécialiste en ingénierie de réservoir met en oeuvre un logiciel de calcul, appelé « simulateur de réservoir » (ou « simulateur d'écoulement »), qui calcule les écoulements et l'évolution des pressions au sein du réservoir, les résultats de ces calculs lui permettant de prévoir et d'optimiser le gisement en termes de débit et/ou de quantité d'hydrocarbures récupérés. Le calcul du comportement du réservoir suivant un scénario de production donné constitue une « simulation de réservoir ».

## État de la technique

On connaît une méthode pour optimiser l'exploitation d'un gisement de fluide traversé par un réseau de fractures, dans laquelle on simule des écoulements de fluides dans le gisement au moyen d'une modélisation simplifiée mais réaliste du gisement. Cette représentation simplifiée est appelée "approche double milieu", elle est proposée par Warren J.E. et al. dans "The Behavior of Naturally Fractured Réservoirs", SPE Journal (septembre 1963), 245-255. Cette technique consiste à considérer le milieu fracturé comme deux continua échangeant des fluides entre eux : des blocs matriciels et des fractures. On parle alors de modèle « double milieu » ou « double porosité ». Ainsi, la modélisation en "double milieu" d'un gisement fracturé consiste à discrétiser ce gisement en deux ensembles de mailles (appelés grilles) superposés, constituant la grille "fissure" et la grille "matrice". Chaque volume élémentaire du gisement fracturé est ainsi conceptuellement représenté par deux mailles, l'une "fissure" et l'autre "matrice", couplées entre elles (c'est-à-dire échangeant des fluides). Dans la réalité du champ fracturé, ces deux mailles représentent l'ensemble des blocs matriciels délimités par des fractures présents en cet endroit du réservoir. En effet, le plus souvent, les mailles ont des dimensions latérales hectométriques (couramment 100 ou 200 m) compte tenu de la taille des champs et des possibilités limités des logiciels de simulation en termes de capacité et temps de calcul. Il en résulte que, pour la plupart des champs fracturés, le volume élémentaire (maille) de réservoir fracturé renferme d'innombrables fractures formant un réseau complexe délimitant de multiples blocs matriciels de dimensions et formes variables suivant le contexte géologique. Chacun des blocs réels constitutifs échange des fluides avec les fractures qui l'entourent à un rythme (débit) qui lui est propre car dépendant des dimensions et de la forme de ce bloc particulier.

Face à une telle complexité géométrique du milieu réel, la démarche consiste, pour chaque volume élémentaire (maille) de réservoir, à représenter le milieu fracturé réel comme un ensemble de blocs matriciels tous identiques, parallélépipédiques, délimités par un réseau orthogonal et régulier de fractures orientées suivant les directions principales d'écoulement : pour chaque maille, on définit ainsi un bloc matriciel, dit « représentatif » (de la distribution réelle (géologique) des blocs), unique et de forme parallélépipédique. Il est alors possible de formuler et calculer les flux d'échange matrice-fissure pour ce bloc "représentatif", et d'en multiplier le résultat par le nombre de tels blocs dans le volume élémentaire (maille) pour obtenir le flux à l'échelle de cette maille.

Dans la version "simple perméabilité" du modèle double milieu, l'écoulement des fluides à l'échelle du réservoir, est supposé ne s'effectuer que via les fractures (i.e. via la seule grille fracture), des échanges de fluides intervenant localement entre les fractures et les blocs matriciels (i.e. entre les deux mailles d'un couple donné de mailles "fracture" et "matrice" représentant le réservoir poreux fracturé en un endroit donné du champ). Dans la version "double perméabilité" de ce même modèle, l'écoulement des fluides s'opère au sein des deux milieux "fracture" et "matrice" à l'échelle du réservoir, avec toujours des échanges fracture-matrice locaux de fluides intervenant localement entre les fractures et les blocs matriciels

Une telle représentation (modélisation) du réservoir fracturé réel (géologique) est utilisée pour reproduire, i.e. "simuler", la réponse (le comportement) du champ lors de sa mise en production. Pour ce faire, des équations d'écoulement ou transfert sont formulées, explicitées et résolues pour chacune des mailles constitutives du modèle suivant la méthode résumée ci-après : l'ensemble des équations mathématiques appliquées au double milieu représentant le réservoir fracturé constitue le simulateur de réservoir double milieu, bien connu des spécialistes.

Un simulateur de réservoir permet, à partir de données d'entrées concernant d'une part les deux milieux (matrice et fracture), et d'autre part les fluides que ce double milieu contient, de déterminer, à divers instants ("pas de temps") et en chaque maille, les valeurs de divers paramètres quantifiant l'état de ces deux milieux tels que les saturations (en huile, gaz, eau), les pressions, les concentrations, les températures,... Ce simulateur résout deux jeux d'équations, l'un relatif au milieu matriciel, et l'autre relatif au milieu fracturé. Pour mémoire, on rappelle que ces équations expriment les bilans de masse (par constituant) et d'énergie pour chaque couple de mailles "fracture" et "matrice" représentant un volume élémentaire du réservoir fracturé poreux réel : ces bilans de masse font intervenir des flux d'échange entre mailles du même milieu (fracture ou matrice) voisines dans l'espace, le terme d'échange matrice-fissure objet de la présente invention, un éventuel terme d'injection ou production si un puits traverse le volume élémentaire considéré, l'ensemble des termes de flux précédents étant égal au terme d'accumulation de matière ou d'énergie de la maille considérée). Ainsi, les équations relatives au milieu "matrice" et au milieu "fracture" en chaque point du réservoir sont couplées, via un terme d'échange, décrivant les flux d'échange (de masse ou d'énergie) entre la roche (matrice) poreuse et les fractures qui la traversent : cette modélisation des échanges matrice - fracture est essentielle, car la matrice renferme le plus souvent l'essentiel des réserves à produire.

La méthode adoptée jusqu'à ce jour, pour formuler ces échanges matrice-fracture (ou matrice-fissure), consiste, pour chaque couple de mailles fracture et matrice discrétisant le modèle double milieu :

- d'une part à déterminer les dimensions de blocs matriciels identiques (en dimensions et forme) supposés représentatifs de la distribution réelle complexe des blocs présents dans ce volume élémentaire de réservoir ;

- puis à formuler et calculer le flux d'échange matrice-fissure en fonction des dimensions de ce bloc représentatif ainsi calculées (ce flux est alors égal au flux exprimé pour un tel bloc représentatif multiplié par le nombre de tels blocs dans la maille considérée).

Ainsi, les formulations d'échange adoptées à ce jour dans les simulateurs de réservoir fracturé, qui s'appuient sur une représentation très simplifiée de ce type de réservoir, s'avèrent très approximatives et incapables de rendre fidèlement compte de l'ensemble des mécanismes d'échange susceptibles d'être mis en jeu, qui comprennent la diffusivité de pression, la capillarité, la gravité, la diffusion moléculaire, la conduction et des forces visqueuses.

En effet, d'une part, l'échange entre blocs de matrice et fissures est exprimé à l'échelle de la maille (hectométrique) du modèle de simulation en considérant qu'un bloc matriciel de dimensions et forme fixées est représentatif de ("équivalent" à) l'ensemble des blocs réels (géologiques) de la maille.

D'autre part, l'échange est supposé pseudo-permanent c'est-à-dire que le flux d'échange aux limites de ce bloc équivalent est proportionnel à la différence de potentiel (ex.: la différence de pression, la différence de température, ...) entre les deux milieux matrice et fissures. Pour chaque milieu, ce potentiel (température par exemple) est supposé uniforme au sein d'un milieu donné, donc dans le cas présent uniforme (constant) au sein de chaque bloc représentatif de la maille considérée à l'instant de simulation considéré. Or, les échanges entre fissures et blocs, notamment s'ils impliquent plusieurs phases fluides, ne sont pas instantanés. De plus, en dehors des effets gravitaires et d'entraînement visqueux (par l'écoulement de fracture), ces échanges concernent d'abord la périphérie des blocs avant de se propager vers leur centre. Cette non-uniformité spatiale du changement d'état des blocs matriciels induit aussi une évolution temporelle non stationnaire, puisque le fluide de la fracture accède beaucoup plus rapidement aux bordures du bloc qu'à son centre. Une restitution fidèle du changement d'état des blocs nécessiterait ainsi de discrétiser le bloc afin d'y simuler les déplacements à une échelle locale (intra-bloc), la résultante de ces écoulements à la frontière bloc - fracture constituant alors une estimation beaucoup plus précise de l'échange matrice - fracture au cours du temps.

Par exemple, il convient de rappeler que de multiples expressions de ce facteur de forme $\sigma$ constant (*i.e.* uniquement dépendant des dimensions a, b, c du bloc et indépendant de la variable résolue par le simulateur, telle que la saturation en eau par exemple) ont été proposées au cours des dernières décennies : par exemple, la première d'entre elles, proposée par Kazemi *et al.* en 1976 (réf. : Kazemi, H., Merrill, L.S., Porterfield, K.L. and Zeman, P.R.: "Numerical Simulation of Water-Oil Flow in Naturally Fractured Réservoirs", SPE Journal (Dec. 1976) 317), définit le facteur de forme constant de la manière suivante :

$$\sigma = \frac{4}{a^2} + \frac{4}{b^2} + \frac{4}{c^2}.$$

Le document US2008/133186 décrit une méthode pour simuler des flux de fluide dans un réservoir fracturé en utilisant un réseau de fractures discrets.

La demande de brevet EP2453106 décrit une méthode pour caractériser le réseau de fractures d'un gisement fracturé et une méthode pour l'exploiter.

Le document : « B. Bourbiaux : « Fractured réservoir simulation : a challenging and rewarding issue », oil & gas science and technology - revue de l'institut français du pétrole, vol. 65, no. 2, 1 mars 2010, pages 227-238 » décrit le contexte des réservoirs fracturés à des fins de simulation.

Afin de prendre en compte le caractère transitoire du flux d'échange, la demande de brevet FR 2 925 726 A décrit une méthode, dans laquelle le flux d'échanges transitoires entre les blocs poreux et les fractures est déterminé au moyen d'une fonction de forme (appelée également facteur de forme) transitoire. Toutefois, la méthode décrite dans le précédent document (brevet FR 2 925 726 A) suppose la connaissance d'images (géologiquement) représentatives du réseau de fractures et donc ne considère pas les situations où les informations disponibles relatives au réseau de fractures ne sont pas aussi détaillées. En effet, en pratique, ces informations peuvent se limiter par exemple aux dimensions d'un bloc équivalent moyen supposé représentatif du réseau de fractures à l'échelle de la maille de réservoir considérée. Des situations intermédiaires peuvent également se présenter dans lesquelles on dispose des dimensions d'un bloc équivalent moyen à l'échelle de chaque maille d'un modèle à maillage fin (tel qu'un modèle géologique avant sa simplification en modèle de réservoir plus grossier).

Ainsi, l'objet de l'invention propose de perfectionner l'enseignement du document FR 2 925 726, au moyen d'un procédé pour optimiser l'exploitation d'un gisement de fluide traversé par un réseau de fractures, dans lequel on détermine les termes d'échanges transitoires entre blocs matriciels et fractures, pour tout type d'informations disponibles concernant le réseau de fractures, i.e. quel que soit le niveau de connaissance du milieu fracturé, afin de permettre une prévision la plus réaliste et fiable possible de la production de fluides renfermés dans des réservoirs poreux fracturés et/ou faillés.

**Le procédé selon l'invention**

L'invention concerne un procédé pour optimiser l'exploitation d'un gisement de fluide traversé par un réseau de fractures, dans lequel on discrétise ledit gisement en un ensemble de mailles, on associe à chacune des mailles au moins une information caractérisant ledit réseau de fractures permettant de délimiter des blocs poreux et des fractures au sein d'une maille, ladite information étant les dimensions d'au moins un bloc équivalent, ledit bloc équivalent étant anisotrope de perméabilités $k_x$, $k_y$, $k_z$ et de dimensions a, b, c, pour ce procédé, on réalise les étapes suivantes :

    a) on détermine, en chaque maille un flux d'échanges transitoires intervenant entre lesdits blocs poreux et lesdites fractures au moyen des étapes suivantes :

        i) on détermine une fonction de forme géologique et transitoire IV au moyen de ladite information caractérisant ledit réseau de fractures, ladite fonction de forme géologique et transitoire étant déterminée pour un bloc isotrope de perméabilité modifiée k' et de dimensions modifiées a', b', c' de telle sorte que ledit bloc isotrope soit équivalent au bloc anisotrope du point de vue des flux d'échanges par unité de volume de matrice ;

ii) on calcule ledit flux d'échanges à l'aide de ladite fonction de forme $I_V$ ;

b) on simule des écoulements de fluides dans ledit gisement au moyen d'un simulateur d'écoulement et dudit flux d'échange ; et

c) on optimise l'exploitation dudit gisement au moyen de ladite simulation des écoulements de fluides.

Selon l'invention, ladite information est une image représentative dudit réseau de fractures délimitant des blocs poreux et des fractures construite à partir d'observations directes et indirectes ou des dimensions d'au moins un bloc équivalent.

Selon l'invention, on prend en compte ledit type d'information pour la détermination de ladite fonction de forme en appliquant les règles suivantes :

- si le type d'information pour chaque maille consiste en les dimensions (a, b, c) d'un bloc équivalent, on détermine ladite fonction de forme $I_V$ au moyen d'une relation analytique du type : $I_V(X) = f(a,b,c, X)$ où $X$ est une distance d'avancée du front d'échange au sein dudit bloc poreux ;
- si le type d'information pour chaque maille du modèle de réservoir consiste en les dimensions $(a_i,b_i,c_i)$ des blocs équivalents relatifs à des mailles i de dimensions $(\Delta A_i, \Delta B_i, \Delta C_i)$ d'un modèle maillé plus finement , on détermine

$$V(x) = \sum_i \frac{(\Delta A_i)(\Delta B_i)(\Delta C_i)}{a_i b_i c_i} V_{(aibici)}(x)$$

analytiquement un fonction d'invasion $V(x)$ par une formule du type:

où $V_{(aibici)}(x)$ est la fonction d'invasion du bloc équivalent $(a_i,b_i,c_i)$ avec $V_{(aibici)}(x) = a_i b_i c_i$ si $x > \min(a_i,b_i,c_i)$ la fonction d'invasion du bloc équivalent, puis on détermine numériquement ladite fonction de forme $I_V$ au moyen d'une relation

$$I_V(X) = \frac{1}{\Delta A \Delta B \Delta C} \frac{1}{\int_0^x \frac{dx}{V'(x)}}$$

de la forme                    avec $X$ une distance d'avancée du front d'échange au sein dudit bloc poreux et $V'(x)$ la dérivée par rapport à x de ladite fonction d'invasion $V(x)$ ;

- et si le type d'information pour chaque maille du modèle de réservoir consiste en l'image représentative du réseau de fractures, on détermine une fonction d'invasion $V(X)$ par traitement d'image, puis on détermine numériquement

$$I_V(X) = \frac{1}{\Delta A \Delta B \Delta C} \frac{1}{\int_0^x \frac{dx}{V'(x)}}$$

ladite fonction de forme $I_V$ au moyen d'une relation de la forme                    avec $X$ une distance d'avancée du front d'échange au sein dudit bloc poreux et $V'(x)$ la dérivée par rapport à $x$ de ladite fonction d'invasion $V(x)$.

De préférence, au cas où le type d'information pour chaque maille correspond aux dimensions (a, b, c) d'un seul bloc équivalent, on détermine ladite fonction de forme $I_V$ de telle sorte que :

- si ledit bloc équivalent est de perméabilité isotrope k, ladite fonction de forme $I_V$ est déterminée à partir des dimensions a, b et c ; et
- si ledit bloc équivalent est de perméabilité anisotrope $k_x,k_y,k_z$ selon les axes dudit bloc équivalent, on détermine à partir desdites perméabilités $k_x,k_y,k_z$ et desdites dimensions a, b et c les dimensions d'un bloc équivalent (a', b', c') isotrope de perméabilité k' équivalent audit bloc anisotrope en termes des flux d'échanges par unité de volume de ladite matrice, et on détermine ladite fonction de forme à partir des dimensions a', b', et c'.

De manière avantageuse, dans le cas d'échanges diphasiques, on modifie pour ladite simulation au moins un paramètre impliqué dans l'échange matrice-fractures, telles que les pressions capillaires et les perméabilités relatives, de manière à être cohérent avec ladite fonction de forme $I_V$.

De plus, on peut calculer ledit flux d'échanges $f_p$ au moyen d'une relation du type : $f_p = CP_{mp}\Delta\Phi_p$, avec C le coefficient géométrique défini par $C = \Delta A - \Delta B \cdot \Delta C \cdot I_V(X)$, $\Delta A, \Delta B, \Delta C$ les dimensions de ladite maille, $\Delta\Phi_p$ la différence de potentiel et $P_{mp}$ une propriété relative aux fluides et au milieu matriciel.

En outre l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'invention, lorsque ledit programme est exécuté sur un ordinateur.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre l'invasion d'un bloc équivalent.
La figure 2 illustre les étapes du procédé selon l'invention.
Les figures 3 et 4 illustrent des courbes comparatives entre les résultats obtenus (récupération en fonction du temps) pour le procédé selon l'invention et un procédé selon l'art antérieur.

**Description détaillée de l'invention**

Le procédé selon l'invention permet d'optimiser l'exploitation d'un gisement d'hydrocarbures, notamment lorsque celui-ci comporte un réseau de fractures. A partir de données sismiques, de données de puits, et de données sédimentaires et lithologiques, on construit un modèle géologique du gisement étudié, consistant en une représentation détaillée de sa réelle complexité interne. Ce modèle comporte un ensemble de maille. Chaque maille contient une image du réseau de fractures. Ce modèle forme un milieu poreux complexe, composé d'un ensemble de blocs matriciels poreux, de formes et tailles irrégulières. Chacun des blocs est délimité par des fractures.

Compte tenu de sa complexité géométrique, un tel modèle, bien que représentatif, ne peut être utilisé pour effectuer des prévisions de production du gisement. Il est indispensable de le simplifier en un modèle dit « équivalent ». On appelle « milieu équivalent » un milieu dont l'estimation de la récupération d'huile lors d'un processus de déplacement, tel que l'imbibition capillaire, est sensiblement la même que l'estimation de la récupération d'huile effectuée sur le milieu poreux complexe, i.e. représentatif des diverses formes et dimensions des blocs matriciels constituant le gisement considéré.

Ainsi, à partir de ce modèle géologique, selon l'art antérieur, on construit un modèle simplifié (simplification par équivalence à un modèle de type Warren & Root), dit « équivalent », constitué de blocs de dimensions et formes identiques qui possèdent les mêmes propriétés pétrophysiques et se comportent de manière équivalente en terme de récupération d'huile. Par exemple, le critère d'équivalence est fondé sur la récupération d'huile lors du processus d'imbibition capillaire des blocs mis en jeu lors d'une injection d'eau.

Selon l'invention, on transcrit dans le modèle de simulation dynamique des échanges le processus de déplacement sur lequel on s'est appuyé pour construire le modèle "équivalent", à savoir la progression d'un front de la périphérie au centre des blocs matriciels. On réalise alors des simulations d'écoulement, qui permettent de calculer des prévisions de production plus représentatives, plus fiables, plus précises, et plus nombreuses. L'invention permet de prendre des décisions de développement moins risquées et plus rapidement.

Le procédé selon l'invention comporte quatre étapes :

1- Discrétisation du gisement en un ensemble de mailles

2- Modélisation du réseau de fractures

3- Simulation des écoulements de fluides

4- Optimisation des conditions de production du gisement

1- Discrétisation du gisement en un ensemble de mailles

Depuis longtemps, l'industrie pétrolière allie les mesures sur champ (in situ) aux modélisations expérimentales (réalisées au laboratoire) et/ou numériques (réalisées au moyen de logiciels).

Les modélisations des gisements pétroliers, constituent donc une étape technique indispensable à toute exploration ou exploitation de gisement. Ces modélisations ont pour but de fournir une description du gisement, caractérisée par la structure/géométrie et les propriétés pétrophysiques des dépôts ou formations géologiques qui le constituent.

Ces modélisations se basent sur une représentation du gisement en un ensemble de mailles. Chacune de ces mailles représente un volume donné du gisement, et constitue un volume élémentaire du gisement. L'ensemble des mailles constitue une représentation discrète du gisement, appelée modèle géologique.

### 2- Modélisation du réseau de fractures

Pour prendre en compte le rôle du réseau de fractures dans la simulation des écoulements au sein du gisement, il est nécessaire d'associer à chacun de ces volumes élémentaires (mailles) une modélisation des fractures.

Ainsi, selon l'invention, on part d'un modèle géologique du gisement étudié, c'est-à-dire une représentation plus ou moins détaillée du réseau de fractures, aussi fidèle que possible des observations directes et indirectes du réservoir faites par les spécialistes en charge de la caractérisation du réservoir. Ce modèle constitue un milieu poreux complexe composé d'un ensemble de blocs matriciels poreux, de formes et tailles irrégulières, délimités par des fractures. Ce milieu poreux complexe constitue une image représentative du réseau réel de fractures délimitant les blocs matriciels.

Pour mettre en oeuvre une telle méthode, on peut utiliser des logiciels de modélisation, bien connus des spécialistes, tel que le logiciel FRACAFlow® (IFP, France).

En raison de son extrême complexité géométrique, le modèle géologique précédent, représentatif du réservoir fracturé réel, ne peut être utilisé pour simuler, *i.e.* reproduire et/ou prédire, la production du gisement lors de la mise en oeuvre d'un procédé de récupération, tel que l'injection d'eau par exemple.

Pour contourner cet obstacle, la méthode pratique existante consiste à simplifier ce modèle du milieu poreux complexe réel. Cette méthode repose sur l'approche, appelée "approche double porosité", proposée par exemple par Warren J.E. et al. (Réf. : "The Behavior of Naturally Fractured Réservoirs", SPE Journal (septembre 1963), 245-255). L'approche "double porosité" consiste à considérer le milieu fracturé comme deux continua de propriétés contrastées et échangeant des fluides entre eux : le continuum "fracture" (ou "fissure") constitué du réseau de fractures et le continuum "matrice" constitué des blocs matriciels, la réunion des deux continua constituant un "double milieu". Les simulateurs de réservoir reposant sur cette approche sont dits simulateurs à "double porosité" ou "double milieu".

### 3- Simulation des écoulements de fluides

*Principe*

A ce stade, l'ingénieur réservoir dispose d'une représentation géologique du gisement d'hydrocarbures fracturé, dont il souhaite extraire les hydrocarbures.

On utilise alors un outil bien connu des spécialistes : un simulateur de réservoir à double milieu. Chacune des deux grilles (ensemble de mailles) de ce simulateur de réservoir est renseignée par des données d'entrées $E(t)$ qui concernent d'une part les propriétés (faciès lithologique, perméabilités de matrice et de fissure ($K_m$, $K_f$), porosités de matrice et de fissure ($\Phi_m$, $\Phi_f$), ...) liées à chacun des deux milieux "matrice" (pour la grille dite "matrice") et "fracture" (pour la grille dite "fissure"), et d'autre part des propriétés liées aux fluides renfermés par ces deux milieux (masses volumiques, viscosités,...). Pour cette représentation, on considère les échanges au sein du milieu fracture, les échanges au sein du milieu matrice, et les échanges entre le milieu matrice et le milieu fracture pour un couple de mailles donné.

Au moyen de ces informations, le simulateur détermine, en chaque maille, et pour chaque pas de temps $t$, divers paramètres $S(t)$, tels que la saturation ($S_m$, $S_f$) de phase (eau ou huile par exemple) dans chacun des deux milieux matrice et fissure, la pression de fluide ($P_m$, $P_f$) correspondante dans chacun des deux milieux, éventuellement la concentration, la température, etc., suivant la nature du procédé de récupération (injection d'eau, de gaz, etc...). Pour ce faire, le simulateur résout deux ensembles d'équations couplées, un premier ensemble relatif au milieu matriciel, et un deuxième ensemble relatif au milieu fracturé. Ces deux jeux d'équations sont couplés, via un terme de flux, exprimant les transferts de masse et/ou d'énergie (dits "échanges matrice-fissure") entre la roche poreuse (blocs de matrice) et les fractures qui la traversent. Ce flux d'échange matrice-fracture *(f)* dépend de la différence de potentiel ($\Delta\Phi$) entre ces deux milieux, celle-ci s'exprimant comme une différence de pression, température, etc..., suivant la nature du processus physique d'échange mis en jeu par le procédé de récupération appliqué.

Selon le procédé de l'invention, le facteur de proportionnalité, appelé facteur d'échange, reliant le flux d'échange à la différence de potentiel matrice-fissure, est désormais directement déduit de la représentation géologique du réservoir (pour sa composante géométrique - voir ci-dessous). De plus, l'évolution au cours du temps de ce facteur (i.e. son caractère transitoire) est désormais prise en compte en utilisant cette même information géologique. Ce facteur d'échange transitoire permet de prendre en compte tous les phénomènes diffusifs en fonction du temps, liés à des modifications de pression, capillarité, température, ...

Le facteur de proportionnalité entre le flux *(l)* et la différence de potentiel ($\Delta\Phi$) dépend d'une part, des propriétés des phases fluides et du milieu matriciel mises en jeu par le phénomène diffusif considéré (par exemple, du produit de la mobilité $\lambda_p$ de la phase fluide et de la perméabilité de la matrice $K_m$ dans le cas d'un écoulement polyphasique d'une phase $p$ : $P_{mp}=K_m.\lambda_p$), d'autre part, d'un coefficient géométrique, noté $C$, décrit ci-après. Ce qui conduit à l'expression suivante du flux d'échange (de la phase $p$), exprimé par unité de volume de matrice :

$$f_p = C.P_{mp}.\Delta\Phi_p$$

Le coefficient géométrique C représente le rapport entre l'aire d'échange et la distance d'échange entre les fractures d'une part, et les blocs matriciels d'autre part, ceci à l'échelle de la maille, ou volume élémentaire (hectométrique) de réservoir. Jusqu'alors exprimé à partir des dimensions d'un bloc dit "équivalent" à la représentation géologique et supposé invariant au cours du temps, il peut être désormais directement déduit d'informations permettant de le rendre variable au cours du temps.

*Calcul du coefficient géométrique C, géologique et transitoire*

Cette étape consiste à déterminer, à partir du milieu poreux complexe construit à l'étape 2, des paramètres caractérisant des échanges transitoires (i.e. dépendants du temps, qui influence la transition ou le passage d'un état à un autre) entre les blocs matriciels et les fractures, pour toute maille du modèle et tout pas de temps de simulation.

Dans un premier temps, à titre d'exemple, on considère le cas d'échanges 3D au sein des couches. Toutefois, le procédé s'applique facilement aux cas d'échanges unidirectionnels ou bidirectionnels.

Au sein d'une maille de dimensions $\Delta A$, $\Delta B$, $\Delta C$, le coefficient géométrique $C$ peut s'écrire de la façon suivante :

$$C = \Delta A \cdot \Delta B \cdot \Delta C \cdot I_V(X)$$

avec :

$X$ :  distance de pénétration du fluide dans la maille à l'instant t considéré

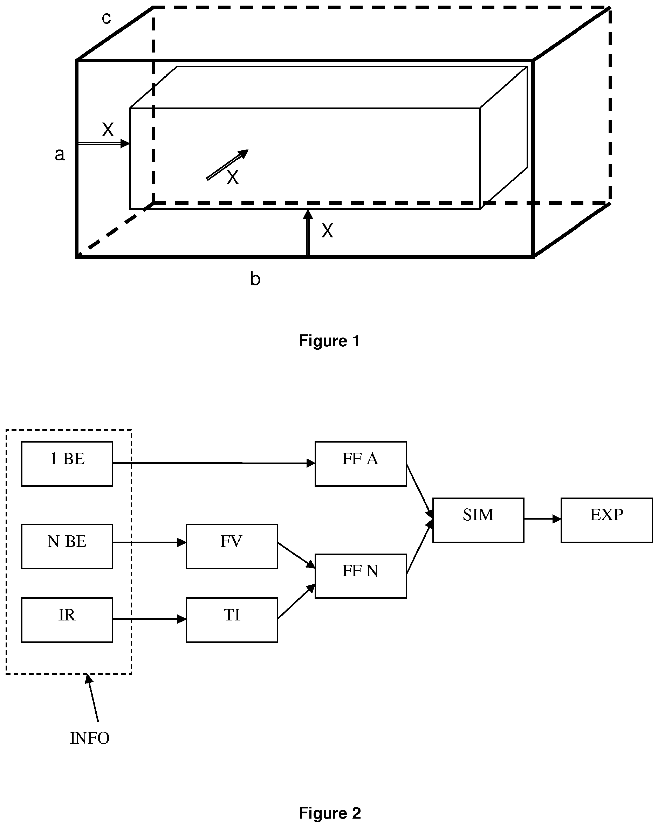

$I_V(X)$ :  fonction de forme géologique et transitoire (il s'agit du coefficient géométrique C rapporté à l'unité d'aire de matrice). En se référant à la figure 1, on exprime le facteur de forme de la façon suivante :

$$I_V(X) = \frac{1}{\Delta A \Delta B \Delta C} \frac{1}{\displaystyle\int_0^X \frac{dx}{S(x)}}$$

où $S(X)$ est la surface totale (i.e. à l'échelle de la maille) du front d'échange parvenu à la distance $X$ de la limite de chacun des blocs de la maille considérée à l'instant considéré. $x$ est la variable distance : $0<x<X=X(t)$.

La figure 1 illustre un bloc matriciel de dimensions a, b, c, envahi par un fluide où le front d'échange est parvenu à la distance X des limites du bloc (limites coïncidant avec des fractures).

Le calcul des facteurs de forme géologiques et transitoires consiste à pré-calculer pour chaque maille de réservoir la fonction $I_V(X)$, X variant de 0 à $X_{max}$ ($X_{max}$ varie en fonction de la maille, et est connu puisqu'il s'agit de la borne supérieure des distances de pénétration X déterminées par traitement d'image de la représentation géologique du réseau de fractures observé en ce point du réservoir).

Pour calculer le facteur de forme $I_V(X)$, on note que :

$$S(x) = \frac{\partial V(x)}{\partial x} = V'(x)$$

V(x) est la fonction reliant le volume matriciel envahi (normé) à la distance de pénétration du fluide x. Cette fonction représente l'avancée d'un front d'échange au sein des blocs poreux, en fonction de la distance d'avancée (X) du front. En deux dimensions, cette relation représente pour une maille donnée, l'aire de blocs poreux envahie par un fluide. En trois dimensions, cette relation représente pour une maille donnée le volume de blocs poreux envahi par un fluide.

*Calcul de la fonction de forme*

Le procédé selon l'invention est adaptable au type d'informations relatives au réseau de fractures disponibles et au niveau de précision de ces informations disponibles. Ces informations relatives au réseau de fractures peuvent être une image représentative du réseau de fractures délimitant des blocs poreux et des fractures à partir d'observations directes et indirectes, ou simplement les dimensions d'au moins un bloc équivalent.

Selon l'invention, le procédé permet de calculer la fonction de forme $I_V$ et donc le flux d'échanges géologique pour les trois situations suivantes représentées en figure 2 :

- situation 1 : seules les dimensions d'un bloc équivalent (1 BE) sont connues à l'échelle des mailles du modèle de réservoir,

- situation 2 : modèle géologique à haute résolution renseigné en termes de plusieurs blocs matriciels équivalents (N BE), et

- situation 3 : informations sur la distribution "réelle" estimée du réseau de fractures naturelles (IR).

La détermination de la fonction de forme $I_V$ prend en compte l'information disponible et diffère en fonction du type d'informations disponibles.

### a. situation 1 : seules les dimensions d'un bloc équivalent supposé représentatif sont connues à l'échelle des mailles du modèle du réservoir considéré. (1 BE)

Dans ce cas, un géologue a estimé les dimensions caractéristiques d'un bloc parallélépipédique représentatif unique pour chaque zone ou chaque maille du modèle de réservoir. Dans ce cas, le modèle de simulation ne peut tenir compte de la distribution des blocs dans chacune de ces zones car elle est non documentée. Tout au plus, il peut vouloir simuler au mieux la dynamique des échanges de fluides entre le bloc dit représentatif, unique par maille, et les fractures. La présente invention fournit dans ce cas une méthode permettant de formuler l'échange transitoire à l'échelle de ce bloc. Cette méthode consiste à traduire sous forme analytique à l'échelle du bloc parallélépipédique l'expression de la fonction de forme (FF A : pour fonction de forme calculée analytiquement).

Par exemple, pour un bloc parallélépipédique *(a,b,c)* de perméabilité isotrope *k*, initialement saturé d'huile et imbibant de l'eau présente dans les fractures par ses six faces, la fonction d'échange transitoire encore appelée fonction de forme est une fonction de la saturation en eau $S_w$ du milieu matriciel (variable inconnue du modèle dans ce cas d'échange diphasique). Elle est notée $I_V(X)$, et peut être également notée $\sigma(S_w)$, en référence au facteur de forme constant $\sigma$, traditionnellement utilisé dans les simulateurs industriels double milieu de réservoirs fracturés. En effet, il convient de rappeler que de multiples expressions de ce facteur de forme $\sigma$ constant (*i.e.* uniquement dépendant des dimensions a, b, c du bloc et indépendant de la variable résolue par le simulateur, telle que la saturation en eau par exemple) ont été proposées au cours des dernières décennies : par exemple, la première d'entre elles proposée par Kazemi *et al.* en 1976 (réf. : Kazemi, H., Merrill, L.S., Porterfield, K.L. and Zeman, P.R.: "Numerical Simulation of Water-Oil Flow in Naturally Fractured Réservoirs", SPE Journal (Dec. 1976) 317) s'exprime comme suit :

$$\sigma = \frac{4}{a^2} + \frac{4}{b^2} + \frac{4}{c^2}.$$

Selon l'invention, les dimensions *(a,b,c)* du bloc équivalent étant connues, la fonction de forme $\sigma(S_w)$ peut, selon la présente invention, se formuler sous une forme analytique simple car la fonction d'invasion $V(x)$ s'exprime aisément en fonction de ces dimensions de bloc, de même que sa dérivée $V'(x)$ requise dans l'expression de $I_V(X)$.

Selon un autre exemple, si le bloc est anisotrope de perméabilités $k_x$, $k_y$ et $k_z$ et de dimensions *a*, *b*, *c* selon les 3 directions (ou axes) x, y et z du bloc, la fonction de forme est calculée pour un bloc isotrope de perméabilité modifiée k' et de dimensions modifiées a', b', c' de telle sorte que ce bloc isotrope soit équivalent (identique) au bloc anisotrope du point de vue des flux d'échanges par unité de volume de matrice. On peut par exemple adopter le bloc isotrope équivalent de perméabilité $k'=k_x$ et de dimensions *a'=a, b' et* c'telles que :

$$b' = b\sqrt{\frac{k_x}{k_y}} \quad \text{et} \quad c' = c\sqrt{\frac{k_x}{k_z}}$$

L'expression de $\sigma$ en fonction de $S_w$ diffère selon que le bloc échange des fluides selon les trois directions (axes) du bloc parallélépipédique (cas général), ou selon seulement une ou deux directions. Ces deux derniers cas peuvent en effet se rencontrer en pratique, notamment si une seule famille de fractures parallèles ou deux parcourent le réservoir, et non un véritable réseau tridimensionnel.

Des formules analogues peuvent être définies pour d'autres mécanismes d'échange, notamment les processus diffusifs tels que la conduction thermique, l'expansion des fluides ou la diffusion moléculaire.

Dans tous les cas, la fonction de forme peut s'écrire de manière analytique, par une relation du type : $I_V(X) = f(a,b,c, X)$ ou $I_V(X) = f(a',b',c',X)$, a, b, c étant les dimensions du bloc équivalent (et, le cas échéant, *a', b', c'* les dimensions du bloc isotrope équivalent au bloc a,b,c anisotrope), et *X* correspondant à la distance d'avancée du front d'échange au sein du bloc poreux. Pour des dimensions de maille $\Delta A$, $\Delta B$, $\Delta C$ fixées, la formule de $I_V(X)$ peut être explicitée en fonction de a, b et c (ou a', b' et c') sans difficulté car la dérivée du volume envahi $S(x) = V'(x)$ s'exprime comme une simple fonction polynomiale de x.

La fonction de forme $I_V$ ainsi déterminée peut être intégrée directement au simulateur de réservoir (sous forme tabulée par exemple), en lieu et place du traditionnel facteur de forme constant ($\sigma$).

### b. situation 2 : mise à disposition d'un modèle géologique à haute résolution (finement maillé) renseigné en termes de bloc matriciel équivalent. (N BE)

Cette situation est celle où le géologue a estimé des dimensions caractéristiques d'un bloc à l'échelle de chaque maille d'un modèle géologique à haute résolution. Toutefois, le modèle de réservoir est la plupart du temps construit selon un maillage plus grossier, compte tenu de l'impossibilité de simuler des historiques de production sur des maillages très fins (*i.e.* à plusieurs millions ou centaines de millions de mailles). Dans cette situation, l'ingénieur doit donc tenir compte du fait que chaque maille de son modèle dit de réservoir représente de nombreuses mailles du modèle géologique, ce qui l'amène à devoir tenir compte, pour le calcul des échanges matrice-fracture, de la distribution des dimensions des blocs représentatifs des mailles du modèle géologique constitutives de chaque maille de son modèle. Pour une maille donnée du modèle de réservoir, une fonction de forme $I_V(X)$ est ainsi formulée comme indiqué précédemment, à partir de la fonction d'invasion $V(x)$ relative à cette maille de réservoir.

En effet, la maille de réservoir est alors constituée de multiples mailles géologiques *i* de dimensions $\Delta A_i, \Delta B_i, \Delta C_i$ qui renferment chacune des blocs parallélépipédiques de dimensions respectives $(a_i, b_i, c_i)$. Pour un bloc parallélépipédique de dimensions $(a_i, b_i, c_i)$, la fonction d'invasion $V_{(aibici)}(x)$ peut s'exprimer sous la forme d'un simple polynôme. La fonction d'invasion $V(x)$ relative à la maille de réservoir s'exprime alors comme la somme des fonctions d'invasion $V_{(ai,bi,ci)}(x)$ de chacun des blocs pondérées par les nombres de bloc, c'est-à-dire :

$$V(x) = \sum_i \frac{(\Delta Ai)(\Delta Bi)(\Delta Ci)}{a_i b_i c_i} V_{(aibici)}(x)$$

où

$$V_{(aibici)}(x) = a_i b_i c_i \quad \text{si } x > Min\,(a_i, b_i, c_i)$$

Concrètement, la fonction d'invasion $V(x)$ rend compte du fait que tous les blocs sont impliqués dans les échanges au démarrage du processus d'échange entre blocs et fractures mais que seuls les plus grands blocs demeurent impliqués dans les échanges à la fin des échanges.

La fonction d'invasion $V(x)$ ainsi déterminée (FV : pour fonction d'invasion) est utilisée pour calculer la fonction de forme $I_V(X)$. Ce calcul est effectué numériquement (FF N : pour fonction de forme calculée numériquement) car la fonction d'invasion $V(x)$, de même que l'inverse de sa dérivée $1/V'(x)$, ne peuvent plus être formulées analytiquement dans le cas général.

### c. situation 3 : l'ingénieur de réservoir dispose d'informations sur la distribution "réelle" estimée du réseau de fractures naturelles. (IR)

Ce peut être le cas notamment si un réseau de fractures de grande taille (ou de failles) a pu être reconstruit au moyen d'outils diagraphiques et/ou sismiques, ou bien si un réseau représentatif de fractures a été modélisé sur la base de multiples informations disponibles corrélables aux fractures (telles que les faciès par exemple). Pour cette troisième situation, la fonction de forme peut être formulée comme indiqué précédemment (formule rappelée plus haut) mais avec une fonction d'invasion $V(x)$ cette fois définie par un traitement direct du réseau dit "réel" de fractures procurant le volume de matrice envahi en fonction de la distance à la fracture la plus proche : diverses techniques, telles que la technique de traitement d'image (TI) rappelée dans la demande de brevet FR 2.925.726 A1, permettent d'obtenir cette fonction d'invasion à l'échelle de la maille de réservoir.

Comme dans la seconde situation, le calcul de la fonction de forme $I_V(X)$ à partir de la fonction d'invasion $V(x)$ ainsi déterminée est effectué numériquement (FF N) car la fonction d'invasion $V(x)$, de même que l'inverse de sa dérivée $1/V'(x)$, n'ont pas d'expression analytique simple.

*Simulation des écoulements (SIM)*

L'ingénieur réservoir choisit un procédé de production, par exemple le procédé de récupération par injection d'eau, dont il demeure ensuite à préciser le scénario optimal de mise en oeuvre pour le champ considéré. La définition d'un scénario optimal d'injection d'eau peut consister, par exemple, à fixer le nombre et l'implantation (position et espacement) des puits injecteurs et producteurs afin de tenir compte au mieux de l'impact des fractures sur la progression des fluides au sein du réservoir.

En fonction du scénario choisi, de la représentation double milieu du gisement, et de la formule reliant le flux d'échange de masse et/ou d'énergie à la différence de potentiel matrice-fracture, on est alors capable de simuler la production d'hydrocarbures escomptée, au moyen du simulateur d'écoulement dit à double milieu.

A tout instant $t$ de la production simulée, à partir des données d'entrées $E(t)$ (données fixes ou variables au fur et à mesure du temps simulé), et de la formule reliant le flux ($f$) d'échange à la différence de potentiel ($\Delta\Phi$), le simulateur résout l'ensemble des équations propres à chaque maille et chacune des deux grilles du modèle (équations faisant intervenir la formule d'échange matrice-fissure décrite plus haut) et délivre ainsi les valeurs solutions des inconnues $S(t)$ (saturations, pressions, concentrations, températures, ...) à cet instant $t$. De cette résolution, découle la connaissance des quantités d'huile produites et de l'état du gisement (distribution des pressions, saturations, etc...) à l'instant considéré. Toutefois, le flux d'échange transitoire, tel que décrit précédemment, fait intervenir des paramètres variables au cours du temps, et notamment la position du front $X(t)$ (distance séparant le bord des blocs et le front) à l'instant considéré $t$ :

$$f_p = C.P_{mp}.\Delta\Phi_p \qquad \text{avec :} \quad C = \Delta A \cdot \Delta B \cdot \Delta C \cdot I_V(X)$$

D'une part, à toute position $X$ du front de progression de la perturbation considérée (de pression, etc...) au sein des blocs, correspond une valeur fixée du volume envahi (ou perturbée) V. D'autre part, la valeur de l'inconnue (pression, saturation, etc...), $S$, décrivant l'état moyen des blocs de la maille du modèle est proportionnelle à la valeur, $V(X)$, du volume envahi (normée) à l'instant $t$ considéré. Ainsi, la variable inconnue $S$ normée entre 0 et 1 peut être assimilée à l'aire envahie $V$ (déjà normée suivant la définition qui en est donnée plus haut), soit finalement :

$$Sn(t) \approx V(X)$$

où $Sn(t)$ est la variable $S(t)$ normée et $X=X(t)$

Ainsi, à tout instant $t$ de simulation, la distance $X$ de pénétration du front d'échange au sein des blocs de la maille peut être reliée à l'inconnue $S(t)$ par inversion de la fonction d'invasion $V(X)$ pour la valeur $Sn(t)$ c'est-à-dire :

$$X(t) = V^1(Sn(t))$$

On note toutefois que $Sn(t)$ est l'inconnue résolue par le simulateur au pas de temps $t$. En conséquence, deux modes de détermination de $X(t)$ peuvent être adoptés :

- détermination explicite de $X(t)$, *i.e.* à partir des inconnues résolues au pas de temps antérieur *(t-1)*,
- détermination implicite de $X(t)$, i.e. en même temps que les autres inconnues $S(t)$.

On décrit ci-après l'approche explicite permettant la détermination de $X(t)$ et du flux d'échange matrice-fissure transitoire à chaque pas de temps de simulation, $t$, pour toute maille du modèle :

- calcul de $X(t)$ : ce calcul est effectué à partir de l'inconnue (état des blocs) normée au pas de temps précédent noté *(t-1)* :

$$X(t) = V^1(Sn(t-1))$$

- calcul de $I_V(X(t))$ :

$$I_V(X) = \frac{1}{\Delta A \Delta B \Delta C} \frac{1}{\int\limits_0^X \frac{dx}{S(x)}}$$

$$\frac{1}{S(x)} = \frac{1}{V'(x)}$$

où $X(t)$ est la borne supérieure d'intégration de la fonction

- calcul de $f_p$ :

$$f_p = C.P_{mp}.\Delta\Phi_p$$

avec :

$$C = \Delta A \cdot \Delta B \cdot \Delta C \cdot I_V(X)$$

Afin de pouvoir initier la simulation suivant cette approche explicite, *i.e.* en vue de la résolution du premier pas de temps de production par le simulateur, $X$ doit être initialisée à une valeur très petite par rapport à $X_{max}$, mais non nulle.

Bien que ce calcul explicite (à partir des inconnues résolues au pas de temps précédent) puisse s'avérer suffisant (i.e. suffisamment précis), un calcul implicite est néanmoins possible. Dans ce cas, la variable $X(t)$ exprimée au pas de temps $t$, soit $X(t) = V^1(Sn(t))$, est incorporée dans le système d'équations à résoudre à ce même pas de temps $t$. Plus précisément, on incorpore dans ce système la dérivée du flux d'échanges transitoires par rapport à l'inconnue $Sn$ du modèle, grâce à l'expression du facteur de forme géologique et transitoire $I_V(X(t))$ en fonction de la distance d'avancée $X(t)$, elle-même fonction de l'inconnue Sn comme indiqué plus haut.

Les fonctions de forme relatives aux mailles (ou groupes/zones de mailles) sont introduites comme données du simulateur double milieu en lieu et place du traditionnel facteur de forme constant ($\sigma$). Enfin, si nécessaire, i.e. dans le cas d'échanges diphasiques par imbibition eau-huile par exemple, l'ingénieur de réservoir modifie également certains paramètres impliqués dans l'échange matrice-fracture, tels que les pressions capillaires et les perméabilités relatives, afin de les rendre cohérents avec le schéma de front qui sous-tend la définition de la fonction de forme. Une fois ces données introduites dans le simulateur, l'ingénieur de réservoir procède à la simulation de scénarios d'exploitation du réservoir fracturé à l'étude, suivant les procédures et usages de l'art antérieur.

4- Optimisation des conditions de production du gisement (EXP)

A partir des simulations réalisées lors des étapes précédentes, les spécialistes peuvent déterminer plusieurs schémas d'exploitation correspondant à différentes configurations possibles d'exploitation du réservoir souterrain : emplacement des puits producteurs et/ou injecteurs, valeurs cibles pour les débits par puits et/ou pour le réservoir, le type d'outils utilisés, les fluides utilisés, injectés et/ou récupérés... Pour chacun de ces schémas, il convient de déterminer leurs prévisions de production après la période de calage. Ces prévisions de production probabilistes sont obtenues au moyen d'un logiciel de simulation d'écoulement ainsi qu'au moyen du modèle numérique de réservoir fracturé calé. Une simulation de réservoir est une technique permettant de simuler les écoulements de fluides au sein d'un réservoir au moyen d'un logiciel appelé simulateur d'écoulement, et du modèle de réservoir. Par exemple, le logiciel PumaFlow [®] (IFP Énergies nouvelles, France) est un simulateur d'écoulement.

On définit un ou plusieurs schémas d'exploitation possibles adapté au modèle de réservoir fracturé (appelé également modèle géologique). Pour chacun de ces schémas, on détermine les réponses par simulation.

A partir des prévisions de productions probabilistes définies pour chaque schéma d'exploitation, les spécialistes peuvent par comparaison choisir le schéma d'exploitation qui leur semble le plus pertinent. Par exemple :

- en comparant le maximum du volume d'huile récupéré, on peut déterminer le schéma de production susceptible de fournir le maximum de récupération ou d'être le plus rentable.

- en comparant l'écart type du volume d'huile récupéré, on peut déterminer le schéma de production le moins risqué.

On exploite alors le réservoir selon le schéma d'exploitation défini par exemple en forant de nouveaux puits (producteur ou injecteur), en modifiant les outils utilisés, en modifiant les débits et/ou la nature de fluides injectés...

L'invention concerne par ailleurs un produit programme d'ordinateur téléchargeable depuis un réseau de communication et/ou enregistré sur un support lisible par ordinateur et/ou exécutable par un processeur. Ce programme comprend des instructions de code de programme pour la mise en oeuvre du procédé tel que décrit ci-dessus, lorsque le programme est exécuté sur un ordinateur.

**Avantages**

La présente invention est donc une méthode alternative pour optimiser l'exploitation d'un gisement de fluide traversé par un réseau de fractures, dans laquelle on fiabilise la prévision des échanges matrice - fractures par les simulateurs de réservoir fracturé (à double milieu), quel que soit le niveau de connaissance du milieu fracturé à l'étude. Elle permet dans tous les cas d'intégrer la nature transitoire des échanges entre blocs matriciels et fractures, et le cas échéant de tenir compte de la distribution des blocs matriciels si elle a pu être estimée à l'échelle de résolution (échelle des mailles) du modèle de réservoir.

Selon l'invention, les images des réseaux de fractures/failles issues de la description, caractérisation et/ou modélisation géologiques de réservoirs fracturés peuvent être utilisées pour prédire les échanges entre les blocs poreux et les fractures au cours du temps, sans aucune simplification (« mise à l'échelle ») préalable de ces images, et en tenant compte du caractère graduel du changement d'état des blocs. A défaut d'informations aussi détaillées sur ces réseaux, il est également possible de tenir compte du caractère transitoire (graduel) des échanges calculés sur une représentation simplifiée par blocs équivalents uniques ou multiples par maille de réservoir.

Ainsi, cette invention tire au mieux parti des informations disponibles sur le réservoir fracturé en vue de prévisions de production améliorées (en fiabilité et précision) pour les raisons suivantes :

- quels que soient la nature et le détail de l'information relative aux dimensions et forme des blocs matriciels à l'échelle des mailles du simulateur de réservoir fracturé, le caractère graduel ("transitoire") du changement d'état des blocs matriciels est pris en compte pour le calcul des échanges entre milieu matriciel et fractures à l'échelle de ces mailles, et

- l'information géologique relative à la distribution variée (complexe) des formes et dimensions des blocs peut, si elle est disponible, être directement intégrée dans le simulateur de réservoir sans être dénaturée (i.e. approximée/modifiée).

Enfin, l'invention s'intègre dans le savoir-faire et les pratiques existantes, à savoir que le maillage et les équations générales du modèle d'écoulement, à double milieu dans le cas présent, sont préservés, ce qui satisfait la condition essentielle d'applicabilité de l'invention, à savoir la possibilité de fournir des résultats (prévisions de production nécessaires au choix d'un procédé de récupération, du nombre/type de puits, etc...) pour des gisements de grande dimension et dans des délais réalistes (i.e. à l'issue de temps de calcul raisonnables). En effet, l'usage d'un maillage fidèle à la complexité géométrique du réseau de fractures réel serait inconcevable à l'échelle d'un réservoir de dimensions kilométriques.

De manière générale, l'invention permet de prévoir le comportement hydrodynamique (débit, pression,..) des champs fracturés (ou considérés et modélisés comme tels) en réponse à des sollicitations extérieures imposées via des puits lors de la production d'hydrocarbures.

Les ingénieurs en charge de l'exploitation du gisement ont alors un outil leur permettant de rapidement évaluer la performance de différents scénarios de production, et ainsi, de sélectionner celui qui optimise l'exploitation au regard des critères sélectionnés par l'opérateur, par exemple d'assurer une production d'hydrocarbure optimale en termes de débit et de récupération.

Ainsi, l'invention trouve une application industrielle dans l'exploitation de tout type de gisement souterrain traversé par un réseau de fractures. Il peut s'agir, par exemple, d'un gisement d'hydrocarbures pour lequel on souhaite optimiser la production, ou un gisement de stockage de gaz par exemple, pour lequel on souhaite optimiser l'injection ou les conditions de stockage.

**Exemples d'application**

On présente deux exemples à titre d'illustration des avantages de la présente invention.

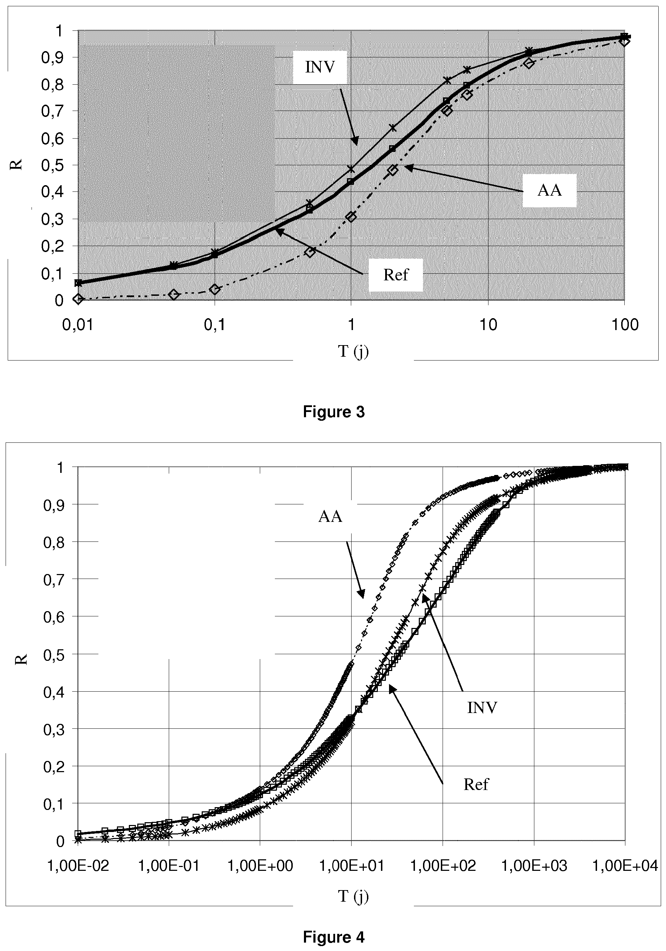

1$^{er}$ exemple. On s'intéresse aux échanges capillaires eau-huile à l'échelle d'une maille de réservoir où les blocs matriciels sont supposés identiques, parallélépipédiques et de dimensions égales à 1 m $\times$ 1 m $\times$ 1 m. Il s'agit de la première situation (situation 1) décrite plus haut. La figure 3 donne la comparaison des courbes de récupération d'huile (normées entre 0 et 1) en fonction du temps T en jours, issues de ces blocs d'1 m de côté, obtenus à partir d'un modèle de référence (Ref) discrétisant finement la matrice poreuse, à partir du modèle double milieu conventionnel à facteur de forme constant selon l'art antérieur (AA), et enfin à partir du modèle double milieu utilisant la fonction de forme transitoire (INV) objet de la présente invention.

On constate que le modèle double milieu avec fonction de forme transitoire (INV), *i.e.* selon le procédé la présente invention, prédit mieux la récupération de référence (Ref) que le modèle double milieu standard (AA). En particulier, on note que la forme de la courbe de récupération est bien mieux reproduite (moindre distorsion entre temps courts et temps longs). Pour ce premier exemple, l'amélioration apportée par le modèle double milieu objet de la présente invention est liée à la prise en compte du caractère graduel (transitoire) de l'invasion du bloc matriciel par l'eau (au lieu d'une invasion supposée uniforme du bloc dans le modèle conventionnel).

2<ème> exemple. On s'intéresse aux échanges capillaires eau-huile à l'échelle d'une maille de réservoir renfermant des blocs de dimensions variables, dont la distribution est décrite par un modèle géologique à haute résolution (finement maillé), dont chaque maille est caractérisée par un bloc équivalent spécifique dont les dimensions ont été quantifiées à partir des informations de fracturation disponibles à cette petite échelle. Il s'agit de la seconde situation (situation 2) décrite plus haut. La figure 4 ci-après donne à nouveau les prévisions de récupération d'huile (normées entre 0 et 1) en fonction du temps T en jours, issue des blocs matriciels de la maille de réservoir qui ont cette fois des tailles et formes diverses. Les prévisions d'un modèle double milieu conventionnel à facteur de forme constant selon l'art antérieur (AA), et les prévisions du modèle double milieu utilisant la fonction de forme objet de la présente invention (INV) sont à nouveau comparées aux prévisions d'un modèle de référence (Ref) discrétisant finement la matrice poreuse de chacun des blocs de dimensions différentes.

Comme dans le premier exemple, le modèle double milieu avec fonction de forme transitoire (INV), *i.e.* selon la méthode la présente invention, prédit beaucoup mieux la récupération de référence que le modèle double milieu conventionnel (AA). A nouveau, la distorsion par rapport à la courbe de référence (entre temps courts et temps longs) est réduite en utilisant le modèle double milieu à fonction de forme transitoire (INV) objet de la présente invention, au lieu du modèle double milieu conventionnel à facteur de forme constant (AA).

Pour ce second exemple, l'amélioration apportée par le modèle double milieu objet de la présente invention est liée à la fois à la prise en compte des dimensions des divers blocs présents dans la maille (au lieu d'un seul bloc dans le modèle conventionnel) d'une part, et à la prise en compte du caractère graduel (transitoire) de l'invasion des blocs par l'eau (au lieu d'une invasion supposée uniforme du bloc dans le modèle conventionnel) d'autre part.

**Revendications**

1. Procédé pour optimiser l'exploitation d'un gisement de fluide traversé par un réseau de fractures, dans lequel on discrétise ledit gisement en un ensemble de mailles, on associe à chacune des mailles au moins une information caractérisant ledit réseau de fractures permettant de délimiter des blocs poreux et des fractures au sein d'une maille, ladite information étant les dimensions d'au moins un bloc équivalent, ledit bloc équivalent étant anisotrope de perméabilités $k_x$, $k_y$, $k_z$ et de dimensions a, b, c, et dans lequel on réalise les étapes suivantes :

   a) on détermine, en chaque maille un flux d'échanges transitoires intervenant entre lesdits blocs poreux et lesdites fractures au moyen des étapes suivantes :

   i) on détermine une fonction de forme géologique et transitoire $I_V$ au moyen de ladite information caractérisant ledit réseau de fractures, ladite fonction de forme géologique et transitoire étant déterminée pour un bloc isotrope de perméabilité modifiée k' et de dimensions modifiées a', b', c' de telle sorte que ledit bloc isotrope soit équivalent au bloc anisotrope du point de vue des flux d'échanges par unité de volume de matrice :

   - si le type d'information pour chaque maille consiste en les dimensions (a, b, c) d'un bloc équivalent, on détermine ladite fonction de forme $I_V$ au moyen d'une relation analytique du type : $I_V(X) = f(a,b,c,X)$ où X est une distance d'avancée du front d'échange au sein dudit bloc poreux ; et
   - si le type d'information pour chaque maille du modèle de réservoir consiste en les dimensions $(a_i, b_i, c_i)$ de blocs équivalents relatifs à des mailles i de dimensions $(\Delta A_i, \Delta B_i, \Delta C_i)$ d'un modèle maillé plus finement, on détermine analytiquement un fonction d'invasion V(x) par une formule du type :

$$V(x) = \sum_i \frac{(\Delta A_i)(\Delta B_i)(\Delta C_i)}{a_i b_i c_i} V_{(aibici)}(x)$$

où $V_{(aibici)}(x)$ est la fonction d'invasion du bloc équiva-

lent ($a_i,b_i,c_i$) avec $V_{(aibici)}(x) = a_ib_ic_i$ si $x > \min(a_i,b_i,c_i)$ la fonction d'invasion du bloc équivalent, puis on détermine numériquement ladite fonction de forme $I_V$ au moyen d'une relation de la forme

$$I_V(X) = \frac{1}{\Delta A \Delta B \Delta C} \int_0^X \frac{dx}{V'(x)}$$

avec X une distance d'avancée du front d'échange au sein dudit bloc poreux et V'(x) la dérivée par rapport à x de ladite fonction d'invasion V(x) ;

ii) on calcule ledit flux d'échanges à l'aide de ladite fonction de forme $I_V$ ;

b) on simule des écoulements de fluides dans ledit gisement au moyen d'un simulateur d'écoulement et dudit flux d'échange ; et

c) on optimise l'exploitation dudit gisement au moyen de ladite simulation des écoulements de fluides.

2. Procédé selon l'une des revendications précédentes, dans lequel dans le cas d'échanges diphasiques, on modifie pour ladite simulation au moins un paramètre impliqué dans l'échange matrice-fractures, telles que les pressions capillaires et les perméabilités relatives, de manière à être cohérent avec ladite fonction de forme $I_V$.

3. Procédé selon l'une des revendications précédentes, dans lequel on calcule ledit flux d'échanges $f_p$ au moyen d'une relation du type : $f_p = CP_{mp}\Delta\Phi_p$, avec C le coefficient géométrique défini par $C = \Delta A \cdot \Delta B \cdot \Delta C \cdot I_V(x)$, $\Delta A, \Delta B, \Delta C$ les dimensions de ladite maille, $\Delta\Phi_p$ la différence de potentiel et $P_{mp}$ une propriété relative aux fluides et au milieu matriciel.

4. Produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des revendications précédentes, lorsque ledit programme est exécuté sur un ordinateur.

**Patentansprüche**

1. Verfahren zur Optimierung der Ausbeutung einer Fluidlagerstätte, die von einem Netz von Brüchen durchquert wird, wobei die Lagerstätte in eine Einheit von Maschen diskretisiert wird, jeder der Maschen mindestens eine das Netz von Brüchen kennzeichnende Information zugeordnet wird, die es ermöglicht, poröse Blöcke und Brüche innerhalb einer Masche zu begrenzen, wobei die Information die Abmessungen mindestens eines äquivalenten Blocks ist, wobei der äquivalente Block anisotrop mit Permeabilitäten $k_x$, $k_y$, $k_z$ und Abmessungen a, b, c ist, und wobei die folgenden Schritte durchgeführt werden:

a) in jeder Masche wird ein Strom von transienten Austauschvorgängen, der zwischen den porösen Blöcken und den Brüchen eintritt, mittels der folgenden Schritte bestimmt:

i) es wird eine geologische und transiente Formfunktion $I_V$ mittels der das Netz von Brüchen kennzeichnenden Information bestimmt, wobei die geologische und transiente Formfunktion für einen isotropen Block veränderter Permeabilität k' und veränderter Abmessungen a', b', c' bestimmt wird, so dass der isotrope Block dem anisotropen Block aus Sicht der Austauschströme pro Matrixvolumeneinheit äquivalent ist:

- wenn der Informationstyp für jede Masche aus den Abmessungen (a, b, c) eines äquivalenten Blocks besteht, wird die Formfunktion $I_V$ mittels einer analytischen Beziehung des Typs: $I_V(X) = f(a,b,c,X)$ bestimmt, wobei X ein Fortschrittsabstand der Austauschfront innerhalb des porösen Blocks ist; und
- wenn der Informationstyp für jede Masche des Reservoirmodells aus den Abmessungen ($a_i$, $b_i$, $c_i$) äquivalenter Blöcke bezüglich von Maschen i der Abmessungen ($\Delta A_i$, $\Delta B_i$, $\Delta C_i$) eines feinmaschigeren Modells besteht, eine Invasionsfunktion V(x) durch eine Formel folgenden Typs analytisch bestimmt wird:

$$V(x) = \sum_i \frac{(\Delta A_i)(\Delta B_i)(\Delta C_i)}{a_i b_i c_i} V_{(aibici)}(x)$$

wobei $V_{(aibici)}(x)$ die Invasionsfunktion des äqui-

valenten Blocks (ai, b$_i$, c$_i$) ist, mit V$_{(aibici)}$(x) = a$_i$,b$_i$,c$_i$ wenn x > min(a$_i$,b$_i$,c$_i$) die Invasionsfunktion des äquivalenten Blocks ist, dann die Formfunktion I$_v$ mittels einer Beziehung der folgenden Form numerisch

$$I_v(X) = \frac{1}{\Delta A \Delta B \Delta C} \frac{1}{\int_0^x \frac{dx}{V\prime(x)}}$$

bestimmt wird: mit X einem Fortschrittsabstand der Austauschfront innerhalb des porösen Blocks und V'(x) der Ableitung bezüglich x der Invasionsfunktion V(x);

ii) der Strom von Austauschvorgängen wird mit Hilfe der Formfunktion I$_v$ berechnet;

b) es werden Strömungen von Fluiden in der Lagerstätte mittels eines Strömungssimulators und des Austauschstroms simuliert; und
c) die Ausbeutung der Lagerstätte wird mittels der Simulation der Fluidströmungen optimiert.

2. Verfahren nach dem vorhergehenden Anspruch, wobei im Fall von zweiphasigen Austauschvorgängen durch die Simulation mindestens ein im Matrix-Brüche-Austausch implizierter Parameter, wie die Kapillardrücke und die relativen Permeabilitäten, verändert wird, um mit der Formfunktion I$_v$ kohärent zu sein.

3. Verfahren nach einem der vorhergehenden Ansprüche, wobei der Austauschstrom f$_p$ mittels einer Beziehung des Typs: f$_p$ = CP$_{mp}$ΔΦ$_p$ berechnet wird, mit C dem geometrischen Koeffizienten definiert durch C = ΔA·ΔB·ΔC·I$_v$(X), ΔA,ΔB,ΔC den Abmessungen der Masche, ΔΦ$_p$ der Potentialdifferenz und P$_{mp}$ einer Eigenschaft bezüglich der Fluide und des Matrixmilieus.

4. Computerprogrammprodukt, das von einem Kommunikationsnetz heruntergeladen und/oder auf einem computerlesbaren Träger gespeichert und/oder von einem Prozessor ausgeführt werden kann, das Programmcodeanweisungen zur Durchführung des Verfahrens nach einem der vorhergehenden Ansprüche enthält, wenn das Programm auf einem Computer ausgeführt wird.

## Claims

1. Method for optimizing the exploitation of a deposit of fluid traversed by a network of fractures, in which said deposit is discretized into a set of meshes, at least one piece of information characterizing said network of fractures making it possible to delimit porous blocks and fractures within a mesh is associated with each of the meshes, said piece of information being the dimensions of at least one equivalent block, said equivalent block being anisotropic of permeabilities $k_x$, $k_y$, $k_z$ and of dimensions *a, b, c,* and in which the following steps are carried out:

a) a stream of transitory exchanges taking place between said porous blocks and said fractures is determined in each mesh by means of the following steps:

i) a geological and transitory shape function $I_V$ is determined by means of said piece of information characterizing said network of fractures, said geological and transitory shape function $I_V$ being determined for an isotropic block of modified permeability *k'* and of modified dimensions *a',b',c'* such that said isotropic block is equivalent to the anisotropic block from the point of view of the streams of exchanges per matrix volume unit:

- if the type of piece of information for each mesh consists of the dimensions (*a,b,c*) of an equivalent block, said shape function $I_V$ is determined by means of an analytical relationship of type: $I_V(X) =$ *f(a,b,c,X),* where *X* is a distance of advance of the exchange front within said porous block; and

- if the type of piece of information for each mesh of the reservoir model consists of the dimensions (*a$_i$,b$_i$,c$_i$*) of equivalent blocks relating to meshes *i* of dimensions (*ΔA$_i$,ΔB$_i$,ΔC$_i$*) of a more finely meshed model, an invasion function *V(x)* is determined analytically by a formula of the type:

$$V(x) = \sum_i \frac{(\Delta A_i, \Delta B_i, \Delta C_i)}{a_i b_i c_i} V_{(aibici)}(x)$$

, where $V_{(aibici)}(x)$ is the invasion function of the equivalent block (*a$_i$,b$_i$,c$_i$*) with $V_{(aibici)}(x) = a_i b_i c_i$ if $x > \min(a_i, b_i, c_i)$ being the invasion function of the equivalent block, then said shape function $I_V$ is determined numerically by means of a relationship of the form

$$I_V(X) = \frac{1}{\Delta A \Delta B \Delta C} \frac{1}{\int_0^x \frac{dx}{V'(x)}}$$

with **X** a distance of advance of the exchange front within said porous block and $V'(x)$ the derivative with respect to $x$ of said invasion function $V(x)$;

ii) said stream of exchanges is calculated using said shape function $I_V$;

b) flows of fluids in said deposit are simulated by means of a flow simulator and of said stream of exchanges; and
c) the exploitation of said deposit is optimized by means of said simulation of the flows of fluids.

2. Method according to the preceding claim, in which, in the event of diphasic exchanges, at least one parameter involved in the matrix/fractures exchange, such as the capillary pressures and the relative permeabilities, is modified for said simulation so as to be consistent with said shape function $I_V$.

3. Method according to one of the preceding claims, in which said stream of exchanges $f_p$ is calculated by means of a relationship of the type: $f_p = CP_{mp}\Delta\Phi_p$, with $C$ the geometric coefficient defined by $C = \Delta A \cdot \Delta B \cdot \Delta C \cdot I_V(X)$, $\Delta A, \Delta B, \Delta C$ being the dimensions of said mesh, $\Delta\Phi_p$ the potential difference and $P_{mp}$ a property relating to the fluids and to the matrix environment.

4. Computer program product which can be downloaded from a communication network and/or stored on a medium which can be read by a computer and/or can be executed by a processor, comprising program code instructions for implementing the method according to one of the preceding claims, when said program is executed on a computer.

**Figure 1**

**Figure 2**

Figure 3

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008133186 A
- EP 2453106 A
- FR 2925726 A
- FR 2925726
- FR 2925726 A1

**Littérature non-brevet citée dans la description**

- **WARREN J.E. et al.** The Behavior of Naturally Fractured Réservoirs. *SPE Journal,* Septembre 1963, 245-255
- **KAZEMI, H. ; MERRILL, L.S. ; PORTERFIELD, K.L. ; ZEMAN, P.R.** Numerical Simulation of Water-Oil Flow in Naturally Fractured Réservoirs. *SPE Journal,* Décembre 1976, 317
- Fractured réservoir simulation : a challenging and rewarding issue. **B. BOURBIAUX.** oil & gas science and technology. l'institut français du pétrole, 01 Mars 2010, vol. 65, 227-238